# EUROPÄISCHE PATENTANMELDUNG

(11) **EP 1 630 489 A2**
(43) Veröffentlichungstag der Anmeldung: **01.03.2006**
(21) Anmeldenummer: 05016939.0
(22) Anmeldetag: 04.08.2005
(51) Int. Cl.: F24H 6/00

(54) **Brauchwasserheizgerät für mobile Anwendungen**

(30) Priorität: 26.08.2004 DE 102004041688
(71) Anmelder: Webasto AG, 82131 Stockdorf (DE)
(72) Erfinder: Fiumdinisi, Alessandro, 20016 Pero (IT)

(57) **Zusammenfassung**

Die Erfindung betrifft ein Brauchwasserheizgerät (10) für mobile Anwendungen, insbesondere für Wohnmobile, Wohnwagen und Wasserfahrzeuge, mit einem mit Brauchwasser gefüllten Tankbehälter (12) und einer Heizvorrichtung (26). Erfindungsgemäß ist die Heizvorrichtung (26) ein Luftheizgerät und der Tankbehälter (12) weist in seinem Inneren (35) einen Wärmetauscher (14) auf, und die Heizvorrichtung (26) ist mit dem Wärmetauscher (14) so verbunden, dass von der Heizvorrichtung (26) erhitzte Luft durch den Wärmetauscher (14) strömt und dabei Wärmeenergie an das Brauchwasser abgibt.

## Beschreibung

Die Erfindung betrifft ein Brauchwassergerät für mobile Anwendungen, insbesondere für Wohnmobile, Wohnwagen und Wasserfahrzeuge, mit einem mit Brauchwasser gefüllten Tankbehälter und einer Heizvorrichtung.

Bei bekannten Brauchwassergeräten für mobile Anwendungen erfolgt die Erwärmung des Brauchwassers bevorzugt über die Motorabwärme oder mit Hilfe der Fahrzeugbatterie. Die US 5,190,025 zeigt ein gattungsgemäßes Brauchwasserheizgerät für mobile Anwendungen, bei dem eine Vorerwärmung des Brauchwassers durch die Motorabwärme erfolgt. Falls kochendes Wasser benötigt wird, wird das so vorerwärmte Wasser durch ein elektrisches Heizelement, das mit der Batterie verbunden ist, bis zum Siedepunkt erhitzt. Bei den heute insbesondere bei kleineren Fahrzeugen eingesetzten verbrauchsarmen Motoren, die nur mehr wenig Motorabwärme abgeben, kann jedoch nur noch eine geringe Vorerwärmung des Brauchwassers erfolgen. Eine dann erforderliche Nacherhitzung des Brauchwassers auf hohe Temperaturen aus der Fahrzeugbatterie ist wiederum energieaufwendig und reduziert so die Batteriekapazität deutlich.

Um diese Probleme zu vermeiden, ist erfindungsgemäß vorgesehen, dass die Heizvorrichtung ein Luftheizgerät ist und der Tankbehälter in seinem Inneren einen Wärmetauscher aufweist, und das Luftheizgerät mit dem Wärmetauscher so verbunden ist, dass vom Luftheizgerät erhitzte Luft durch den Wärmetauscher strömt und dabei Wärmeenergie an das Brauchwasser abgibt. Vorteilhafterweise wird die Heizvorrichtung mittels flüssiger oder gasförmiger Brennstoffe betrieben, wobei besonders vorteilhaft ist, wenn die Heizvorrichtung mittels Dieselkraftstoff oder Benzin betrieben wird. Bevorzugt wird für die Heizvorrichtung ein Luftheizgerät für Kraftfahrzeuge verwendet.

Die Grundidee der Erfindung besteht darin, dass ein bereits für Fahrzeuge zur Verfügung stehendes Luftheizgerät, das mit demselben Brennstoff wie das Fahrzeug selbst, also in der Regel Dieselkraftstoff oder Benzin, betrieben wird, auch zur Erwärmung des Brauchwarmwassers beitragen kann.

Vorzugsweise weist die Heizvorrichtung ein Flanschanschlussstück und der Wärmetauscher ein zu dem Flanschanschlussstück passendes Flanschanschlussgegenstück auf, und die Heizvorrichtung ist mittels des Flanschanschlussstücks und des Flanschanschlussgegenstücks mit dem Wärmetauscher verbunden. Dies ermöglicht einen besonders einfachen und schnellen Aufbau eines Brauchwasserheizgeräts für mobile Anwendungen, da ein bereits serienmäßig mit einem Flanschanschlussstück ausgestattetes Luftheizgerät nur noch am entsprechenden Flanschanschlussgegenstück am Wärmetauscher befestigt werden muss, damit ein betriebsfertiges Brauchwasserheizgerät für mobile Anwendungen bereitsteht.

Weitere Ausführungsformen der Erfindung sind den Unteransprüchen zu entnehmen.

Die Erfindung wird nachfolgend anhand von Ausführungsbeispielen näher erläutert, wobei auf Zeichnungen Bezug genommen wird. Die Zeichnungen zeigen:
- Fig. 1: Teildarstellung des erfindungsgemäßen Brauchwasserheizgeräts für mobile Anwendungen in perspektivischer Ansicht,
- Fig. 2: einen Querschnitt durch das Brauchwassergerät für mobile Anwendungen, und
- Fig. 3: einen weiteren Querschnitt durch das Brauchwasserheizgerät für mobile Anwendungen in Richtung auf die Linie III-III der Fig. 2.

Die Figuren zeigen ein Brauchwasserheizgerät 10 für mobile Anwendungen.

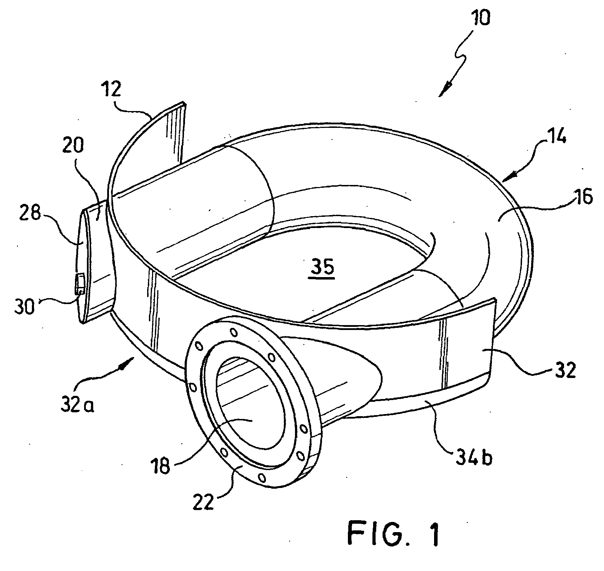

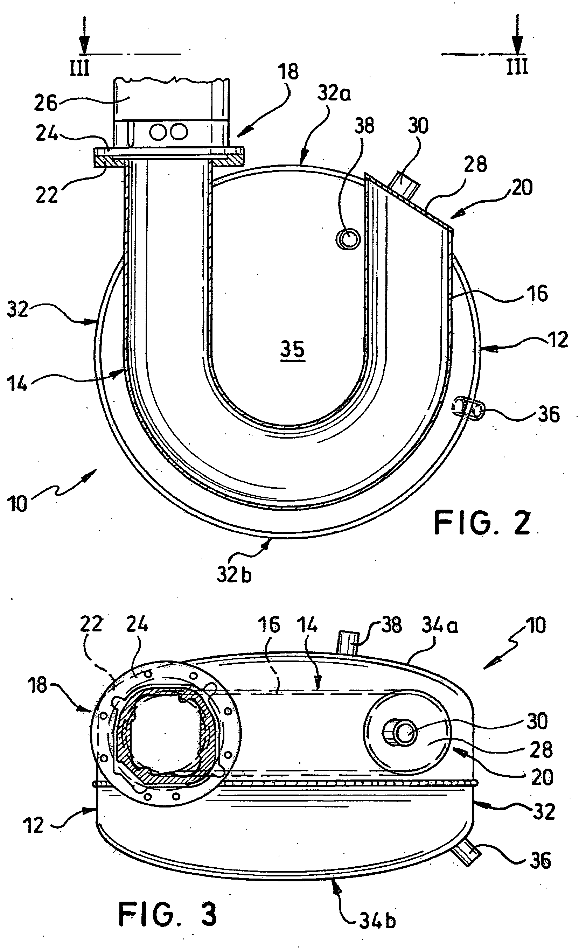

In Fig. 1 ist das Brauchwasserheizgerät 10 mit einem Abschnitt eines Tankbehälters 12 und einem im Inneren des Tankbehälters 12 angeordneten Wärmetauscher 14 dargestellt. Der Wärmetauscher 14 weist ein im Wesentlichen U-förmiges Rohrelement 16 sowie einen Wärmetauschereintritt 18 und einen Wärmetauscheraustritt 20 auf. Am Wärmetauschereintritt 18 ist ein Flanschanschlussgegenstück 22 angeordnet, das mit einem Flanschanschlussstück 24 einer Heizvorrichtung 26 zusammenwirkt (siehe Fig. 2, 3). Der Wärmetauscheraustritt 20 ist mit einer Endplatte 28, die eine Öffnung zur Aufnahme eines Wärmetauscheraustrittsstutzens 30 aufweist, abgeschlossen.

Die Figuren 2 und 3 zeigen zwei Schnitte durch das Brauchwasserheizgerät 10. Der Tankbehälter 12 ist kreiszylinderförmig mit einer Tankbehälterwand 32, einem konvexen Tankbehälterdeckel 34a und einem konvexen Tankbehälterboden 34b. Die Tankbehälterwand 32 hat einen ersten Tankbehälterwandabschnitt 32a, in dem der Wärmetauschereintritt 18 und der Wärmetauscheraustritt 20 angeordnet sind. Dem ersten Wandschnitt 32a in Bezug auf den Tankbehälter 12 diametral gegenüberliegend befindet sich ein zweiter Wandabschnitt 32b. Wie besonders gut in Fig. 2 zu sehen ist, ist der Wärmetauschereintritt 18 am ersten Wandabschnitt 32a des Tankbehälters 12 angeordnet, und das Rohrelement 16 des Wärmetauschers 14 ist so geführt, dass es bis zu dem dem ersten Wandabschnitt 32a diametral gegenüberliegenden zweiten Wandabschnitt 32b reicht. Der Wärmetauscher 14 endet dann im Bereich des ersten Wandabschnitts 32a und tritt dort aus dem Tankbehälter 12 aus. Durch diese Führung des Wärmetauschers 14 wird sichergestellt, dass der Wärmetauscher 14 in möglichst großen Bereichen des Inneren 35 des Tankbehälters 12 wirksam ist und die Energie an das Brauchwasser abgeben kann. Im Tankbehälterboden 34b befindet sich ein Brauchwassereinlassstutzen 36, durch den kaltes Wasser dem Tankbehälter 12 zugeführt werden kann, im Tankbehälterdeckel 34b ist ein Brauchwasserauslassstutzen 38, über den heißes Brauchwasser aus dem Tankbehälter 12 entnommen werden kann.

In der hier dargestellten Ausführungsform ist das Verhältnis Durchmesser/Höhe des Tankbehälters 12 größer als 1. Das Verhältnis des Durchmessers des Rohrelements 16 zum Durchmesser des Tankbehälters 12 ist zwischen etwa 0,15 und etwa 0,25. Durch diese Dimensionierung wird eine rasche Aufheizung des im Tankbehälter 12 befindlichen Brauchwassers erreicht. Da außerdem das Verhältnis Durchmesser/Höhe des Tankbehälters 12 größer als eins ist, wird ein großer Teil des gesamten im Tankbehälter 14 aufbewahrten Brauchwassers rasch erwärmt. Durch die Anordnung des Wärmetauschers 14 im oberen Bereich des Tankbehälters 12 ist aber auch eine Stratifizierung des Temperaturverlaufs im Tankbehälter gewährleistet, so dass immer möglichst heißes Wasser am Brauchwasserauslassstutzen 38 zur Verfügung steht.

Im Folgenden soll noch kurz der Betrieb des Brauchwasserheizgeräts für mobile Anwendungen erläutert werden:
Nach Inbetriebnahme der Heizvorrichtung 26, die hier ein Luftheizgerät für Kraftfahrzeuge ist, strömt die von der Heizvorrichtung 26 erhitzte Luft am Wärmetauschereintritt 18 in den Wärmetauscher 14 und damit auch das Rohrelement 16 ein. Über die Wände des Rohrelements 16 wird Wärme an das im Tankbehälter 12 befindliche Brauchwasser abgegeben. Dabei wird, bedingt durch die Anordnung des Rohrelements 16 im oberen Bereich des Tankbehälters 12, zuerst das Brauchwasser in der oberen Hälfte des Tankbehälters 12 und im weiteren in der unteren Hälfte des Tankbehälters 12 aufgeheizt. Durch die Ausbildung des U-förmigen Rohrelements 16 erfolgt eine gleichmäßige Erwärmung des Brauchwassers im Inneren 35 des Tankbehälters 12 über den ganzen Querschnitt des Tankbehälters 12 hinweg. Die im Wärmetauscher 14 abgekühlte Luft tritt am Wärmetauscheraustrittsstutzen 30 aus dem Wärmetauscher 14 aus.

Ist das Brauchwasser im Tankbehälter 12 erwärmt, so kann warmes Wasser am Brauchwasserauslassstutzen 38 entnommen werden und kaltes Wasser strömt am Brauchwassereinlassstutzen 36 von unten her nach. Damit bleibt auch die Wärmeschichtung im Inneren 35 des Tankbehälters 12 weitgehend erhalten und es ist eine möglichst lang andauernde Entnahme von warmem Brauchwasser aus dem Tankbehälter 12 sichergestellt.

### Bezugszeichenliste

- 10: Brauchwasserheizgerät
- 12: Tankbehälter
- 14: Wärmetauscher
- 16: Rohrelement
- 18: Wärmetauschereintritt
- 20: Wärmetauscheraustritt
- 22: Flanschanschlussgegenstück
- 24: Flanschanschlussstück
- 26: Heizvorrichtung
- 28: Endplatte
- 30: Wärmetauschereintrittsstutzen
- 32: Tankbehälterwand
- 32a, b: erster, zweiter Abschnitt der Tankbehälterwand
- 34a: Tankbehälterdeckel
- 34b: Tankbehälterboden
- 35: Inneres des Tankbehälters
- 36: Brauchwassereinlassstutzen
- 38: Brauchwasserauslassstutzen

## Patentansprüche

1. Brauchwasserheizgerät (10) für mobile Anwendungen, insbesondere für Wohnmobile, Wohnwagen und Wasserfahrzeuge, mit einem mit Brauchwasser gefüllten Tankbehälter (12) und einer Heizvorrichtung (26), **dadurch gekennzeichnet, dass** die Heizvorrichtung (26) ein Luftheizgerät ist und der Tankbehälter (12) in seinem Inneren (35) einen Wärmetauscher (14) aufweist, und die Heizvorrichtung (26) mit dem Wärmetauscher (14) so verbunden ist, dass von der Heizvorrichtung (26) erhitzte Luft durch den Wärmetauscher (14) strömt und dabei Wärmeenergie an das Brauchwasser abgibt.

2. Brauchwasserheizgerät (10) nach Anspruch 1, **dadurch gekennzeichnet, dass** die Heizvorrichtung (26) mittels flüssiger oder gasförmiger Brennstoffe betrieben wird.

3. Brauchwasserheizgerät (10) nach Anspruch 1 oder 2, **dadurch gekennzeichnet, dass** die Heizvorrichtung (26) mittels Dieselkraftstoff oder Benzin betrieben wird.

4. Brauchwasserheizgerät (10) nach einem der vorhergehenden Ansprüche, **dadurch gekennzeichnet, dass** die Heizvorrichtung (26) ein Luftheizgerät für Kraftfahrzeuge ist.

5. Brauchwasserheizgerät (10) nach einem der vorhergehenden Ansprüche, **dadurch gekennzeichnet, dass** die Heizvorrichtung (26) ein Flanschanschlussstück (24) aufweist und der Wärmetauscher (14) ein zu dem Flanschanschlussstück (24) passendes Flanschanschlussgegenstück (22) aufweist, und die Heizvorrichtung (26) mittels des Flanschanschlussstücks (24) und des Flanschanschlussgegenstücks (22) mit dem Wärmetauscher (14) verbunden ist.

6. Brauchwasserheizgerät (10) nach einem der vorhergehenden Ansprüche, **dadurch gekennzeichnet, dass** der Wärmetauscher (14) einen Wärmetauschereintritt (18) und einen Wärmetauscheraustritt (20) aufweist, wobei der Wärmetauschereintritt (18) und der Wärmetauscheraustritt (20) an einem ersten Wandabschnitt (32a) des Tankbehälters (12) angeordnet sind und der Wärmetauscher (14) im Inneren (35) des Tankbehälters (14) im wesentlichen bis zu einem dem ersten Wandabschnitt (32a) diametral gegenüberliegenden zweiten Wandabschnitt (32b) reicht.

7. Brauchwasserheizgerät (10) nach einem der vorhergehenden Ansprüche, **dadurch gekennzeichnet, dass** der Wärmetauscher (14) ein im wesentlichen U-förmiges Rohrelement (16) aufweist.

8. Brauchwasserheizgerät (10) nach einem der vorhergehenden Ansprüche, **dadurch gekennzeichnet, dass** der Tankbehälter (12) im wesentlichen zylinderförmig ist.

9. Brauchwasserheizgerät (10) nach einem der vorhergehenden Ansprüche, **dadurch gekennzeichnet, dass** der Tankbehälter (12) im wesentlichen kreiszylinderförmig ist.

10. Brauchwasserheizgerät (10) nach Anspruch 8 oder 9, **dadurch gekennzeichnet, dass** der Durchmesser des Tankbehälters (12) größer als die Höhe des Tankbehälters (12) ist.

11. Brauchwasserheizgerät (10) nach Anspruch 7 und einem der Ansprüche 9 und 10, **dadurch gekennzeichnet, dass** das Verhältnis des Durchmessers des Rohrelements (16) zum Durchmesser des Tankbehälters (14) zwischen etwa 0,15 und etwa 0,25 ist.
